(19)

Europäisches
Patentamt
European
Patent Office
Office européen
des brevets

(11) **EP 4 557 849 A1**

(12) **EUROPEAN PATENT APPLICATION**
published in accordance with Art. 153(4) EPC

(43) Date of publication:
**21.05.2025 Bulletin 2025/21**

(21) Application number: **23838829.2**

(22) Date of filing: **06.07.2023**

(51) International Patent Classification (IPC):
**H04W 64/00** (2009.01)  **H04W 24/08** (2009.01)

(52) Cooperative Patent Classification (CPC):
**H04W 4/02; H04W 24/08; H04W 24/10;**
**H04W 64/00**

(86) International application number:
**PCT/CN2023/106043**

(87) International publication number:
**WO 2024/012337 (18.01.2024 Gazette 2024/03)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **11.07.2022 CN 202210815562**

(71) Applicant: **Vivo Mobile Communication Co., Ltd.**
**Dongguan, Guangdong 523863 (CN)**

(72) Inventors:
• **QU, Wenkuan**
**Dongguan, Guangdong 523863 (CN)**

• **YANG, Qian**
**Dongguan, Guangdong 523863 (CN)**
• **WANG, Yuanyuan**
**Dongguan, Guangdong 523863 (CN)**
• **SI, Ye**
**Dongguan, Guangdong 523863 (CN)**
• **ZHENG, Minhua**
**Dongguan, Guangdong 523863 (CN)**

(74) Representative: **Cabinet Beaumont**
**4, Place Robert Schuman**
**B.P. 1529**
**38025 Grenoble Cedex 1 (FR)**

(54) **POSITIONING REFERENCE SIGNAL (PRS) MEASUREMENT METHODS, TERMINAL, AND NETWORK SIDE DEVICE**

(57) This application discloses a positioning reference signal PRS measurement method, a terminal, and a network side device, and belongs to the field of communication technologies. The positioning reference signal PRS measurement method according to embodiments of this application includes: The terminal performs PRS measurement on at least one of a plurality of carriers to obtain a positioning measurement result in a case that the terminal is capable of simultaneously performing PRS measurement on the plurality of carriers, where the positioning measurement result is used for positioning the terminal.

A terminal performs PRS measurement on at least one of a plurality of carriers to obtain a positioning measurement result in a case that the terminal is capable of simultaneously performing PRS measurement on the plurality of carriers, where the positioning measurement result is used for positioning the terminal — 201

FIG. 2

**Description**

**CROSS-REFERENCE TO RELATED APPLICATIONS**

This application claims priority to Chinese Patent Application No. 202210815562.6, filed on July 11, 2022 and entitled "POSITIONING REFERENCE SIGNAL PRS MEASUREMENT METHOD, TERMINAL, AND NETWORK SIDE DEVICE", which is incorporated herein by reference in its entirety.

**TECHNICAL FIELD**

This application relates to the field of communication technologies, and in particular, to a positioning reference signal PRS measurement method, a terminal, and a network side device.

**BACKGROUND**

In a wireless communication system, a positioning reference signal (Positioning Reference Signal, PRS) is a reference signal that assists in positioning a terminal.

In the related art, due to a limited capability, a terminal can receive a PRS on only one carrier at a time. The received PRS on the carrier is measured, and a positioning measurement result obtained through the measurement is used for positioning the terminal.

With the development of communication technologies, if a terminal can simultaneously receive PRSs on a plurality of carriers at a time, a measurement method for applying the PRSs on the plurality of carriers to terminal positioning is urgently needed.

**SUMMARY**

Embodiments of this application provide a positioning reference signal PRS measurement method, a terminal, and a network side device, which can implement a measurement method for applying PRSs on a plurality of carriers to terminal positioning.

According to a first aspect, a positioning reference signal PRS measurement method is provided, applied to a terminal, and the method includes:

The terminal performs PRS measurement on at least one of a plurality of carriers to obtain a positioning measurement result in a case that the terminal is capable of simultaneously performing PRS measurement on the plurality of carriers, where the positioning measurement result is used for positioning the terminal.

According to a second aspect, a positioning reference signal PRS measurement method is provided, applied to a network side device, and the method includes:

The network side device receives a positioning measurement result sent by a terminal, where the positioning measurement result is a result obtained by performing PRS measurement on at least one of a plurality of carriers in a case that the terminal is capable of simultaneously performing PRS measurement on the plurality of carriers.

The network side device positions the terminal based on the positioning measurement result.

According to a third aspect, a positioning reference signal PRS measurement apparatus is provided, and the apparatus includes:

a first measurement module, configured to perform PRS measurement on at least one of a plurality of carriers to obtain a positioning measurement result in a case that a terminal is capable of simultaneously performing PRS measurement on the plurality of carriers, where the positioning measurement result is used for positioning the terminal.

According to a fourth aspect, a positioning reference signal PRS measurement apparatus is provided, and the apparatus includes:

a first receiving module, configured to receive a positioning measurement result sent by a terminal, where the positioning measurement result is a result obtained by performing PRS measurement on at least one of a plurality of carriers in a case that the terminal is capable of simultaneously performing PRS measurement on the plurality of carriers; and

a first positioning module, configured to position the terminal based on the positioning measurement result.

According to a fifth aspect, a terminal is provided, where the terminal includes a processor and a memory, the memory stores a program or an instruction runnable on the processor, and the program or the instruction, when executed by the processor, implements the steps of the method according to the first aspect.

According to a sixth aspect, a terminal is provided, including a processor and a communication interface. The processor is configured to perform PRS measurement on at least one of a plurality of carriers to obtain a positioning measurement result in a case that the terminal is capable of simultaneously performing PRS measurement on the plurality of carriers, where the positioning measurement result is used for positioning the terminal.

According to a seventh aspect, a network side device is provided, where the network side device includes a processor and a memory, the memory stores a program or an instruction runnable on the processor, and the program or the instruction, when executed by the processor, implements the steps of the method according to the second aspect.

According to an eighth aspect, a network side device is provided, including a processor and a communication interface. The communication interface is configured to receive a positioning measurement result sent by a terminal. The positioning measurement result is a result obtained by performing PRS measurement on at least one of a plurality of carriers in a case that the terminal is capable of simultaneously performing PRS measurement on the plurality of carriers. The processor is configured to position the terminal based on the positioning measurement result.

According to a ninth aspect, a positioning reference signal PRS measurement system is provided, including: a terminal and a network side device. The terminal may be configured to perform the steps of the positioning reference signal PRS measurement method according to the first aspect. The network side device may be configured to perform the steps of the positioning reference signal PRS measurement method according to the second aspect.

According a tenth aspect, a readable storage medium is provided, where the readable storage medium stores a program or an instruction, and the program or the instruction, when executed by a processor, implements the steps of the method according to the first aspect, or the steps of the method according to the second aspect.

According to an eleventh aspect, a chip is provided, where the chip includes a processor and a communication interface, the communication interface is coupled to the processor, and the processor is configured to run a program or an instruction to implement the method according to the first aspect or the method according to the second aspect.

According to a twelfth aspect, a computer program/program product is provided, where the computer program/-program product is stored in a storage medium, and the computer program/program product is executed by at least one processor to implement the steps of the method according to the first aspect or the steps of the method according to the second aspect.

In the embodiments of this application, in a case that a terminal has a capability of simultaneously performing PRS measurement on a plurality of carriers, the terminal performs PRS measurement on at least one of the plurality of carriers, and the positioning measurement result obtained through measurement is used for positioning the terminal. This implements a measurement method for applying PRSs on a plurality of carriers to terminal positioning.

**BRIEF DESCRIPTION OF THE DRAWINGS**

FIG. 1 is a schematic diagram of a wireless communication system to which an embodiment of this application is applicable;

FIG. 2 is a first schematic flowchart of a positioning reference signal PRS measurement method according to an embodiment of this application;

FIG. 3 is a second schematic flowchart of a positioning reference signal PRS measurement method according to an embodiment of this application;

FIG. 4 is a third schematic flowchart of a positioning reference signal PRS measurement method according to an embodiment of this application;

FIG. 5 is a fourth schematic flowchart of a positioning reference signal PRS measurement method according to an embodiment of this application;

FIG. 6 is a fifth schematic flowchart of a positioning reference signal PRS measurement method according to an embodiment of this application;

FIG. 7 is a sixth schematic flowchart of a positioning reference signal PRS measurement method according to an embodiment of this application;

FIG. 8 is a first schematic structural diagram of a positioning reference signal PRS measurement apparatus according to an embodiment of this application;

FIG. 9 is a second schematic structural diagram of a positioning reference signal PRS measurement apparatus according to an embodiment of this application;

FIG. 10 is a schematic structural diagram of a communication device according to an embodiment of this application;

FIG. 11 is a schematic diagram of a hardware structure of a terminal according to an embodiment of this application; and

FIG. 12 is a schematic structural diagram of a network side device according to an embodiment of this application.

## DETAILED DESCRIPTION

Technical solutions in embodiments of this application are clearly described in the following with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

The terms "first", "second", and so on in this specification and claims of this application are intended to distinguish between similar objects but are not intended to describe a specific order or sequence. It should be understood that the terms used in such a way are interchangeable in proper circumstances, so that the embodiments of this application can be implemented in other sequences than those illustrated or described herein. In addition, the objects distinguished by "first" and "second" are usually of one type, and there is no limitation on quantities of the objects. For example, there may be one or more first objects. In addition, "and/or" in this specification and the claims indicate at least one of the connected objects, and the character "/" usually indicates an "or" relationship between the associated objects.

It should be noted that, the technologies described in the embodiments of this application are not limited to a Long Term Evolution (Long Term Evolution, LTE)/LTE-Advanced (LTE-Advanced, LTE-A) system, and can be further used in other wireless communication systems, such as Code Division Multiple Address (Code Division Multiple Access, CDMA), Time Division Multiple Access (Time Division Multiple Access, TDMA), Frequency Division Multiple Access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the described technologies can be used not only for the above-mentioned systems and radio technologies, but also for other systems and radio technologies. The following descriptions describe a New Radio (New Radio, NR) system for exemplary purposes, and NR terms are used in most of the following descriptions. However, these technologies are also applicable to applications other than the NR system application, such as a 6th generation (6th Generation, 6G) communication system.

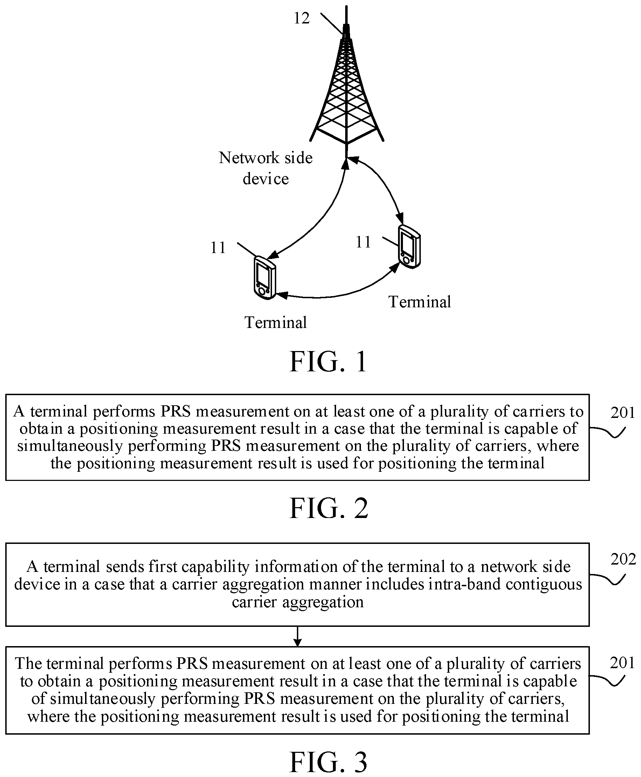

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer) (or referred to as a notebook computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicular user equipment (VUE), pedestrian user equipment (PUE), a smart home (a home device having a wireless communication function, such as a refrigerator, a television, a washing machine, or furniture), a game console, a personal computer (personal computer, PC), a teller machine or a self-service machine, and other terminal-side devices. The wearable device includes a smartwatch, a smart band, a smart headphone, smart glasses, smart jewelry (a smart bracelet, a smart wrist-band, a smart ring, a smart necklace, a smart anklet, a smart ankle chain, and the like), a smart wrist strap, smart clothes, and the like. It should be noted that a specific type of the terminal 11 is not limited in this embodiment of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission/reception point (Transmission/Reception Point, TRP), or some other suitable term in the art. As long as the same technical effect is achieved, the base station is not limited to a specific technical term. It should be noted that in this embodiment of this application, only a base station in an NR system is used as an example for description, and a specific type of the base station is not limited.

A positioning reference signal PRS measurement method provided in the embodiments of this application is described in detail below through some embodiments and application scenarios thereof with reference to the accompanying drawings.

FIG. 2 is a first schematic flowchart of a positioning reference signal PRS measurement method according to an embodiment of this application. As shown in FIG. 2, the method includes the following step 201:

Step 201: A terminal performs PRS measurement on at least one of a plurality of carriers to obtain a positioning measurement result in a case that the terminal is capable of simultaneously performing PRS measurement on the plurality of carriers, where the positioning measurement result is used for positioning the terminal.

For example, when the terminal has a capability of simultaneously performing PRS measurement on a plurality of carriers, the network side device may configure the PRSs on the plurality of carriers for the terminal. When receiving the PRSs on the plurality of carriers, the terminal may select one carrier based on parameters of each carrier, and perform PRS measurement on the one carrier, to obtain a positioning measurement result; or measure a received PRS on each carrier, and determine, based on a measurement result corresponding to the PRS on the each carrier, a positioning measurement result finally used for positioning the terminal; or combine the received PRSs on the plurality of carriers, and measure the combined PRSs to obtain a positioning measurement result.

Specifically, the positioning measurement result includes at least one of the following:
a reference signal time difference (Reference Signal Time Difference, RSTD); a receiving and sending time difference between receiving a PRS and sending an uplink reference signal by the terminal; positioning reference signal-reference signal received power (Positioning Reference Signal-Reference Signal Received Power, PRS-RSRP); positioning reference signal-reference signal received path power (Positioning Reference Signal-Reference Signal Received Path Power, PRS-RSRPP); or a carrier phase (Carrier Phase).

The RSTD is a difference between a reference transmission/reception point (Transmission/Reception Point, TRP) and a measured TRP.

According to the positioning reference signal PRS measurement method provided in this embodiment of this application, when the terminal has a capability of simultaneously performing PRS measurement on a plurality of carriers, the terminal performs PRS measurement on at least one of the plurality of carriers, and a positioning measurement result obtained through measurement is used for positioning the terminal. This implements a measurement method for applying PRSs on a plurality of carriers to terminal positioning.

Optionally, a carrier aggregation manner of the plurality of carriers includes one of the following:

aggregation of multiple intra-band contiguous carriers (intra-band contiguous carrier aggregation, intra-band contiguous CA);
aggregation of multiple intra-band non-contiguous carriers (intra-band non-contiguous carrier aggregation, intra-band non-contiguous CA); or
aggregation of multiple inter-band carriers (inter-band carrier aggregation, inter-band CA).

In the intra-band contiguous carrier aggregation, the plurality of carriers are continuous in a same frequency band, a same radio frequency module may be used to receive PRSs on the plurality of carriers, the terminal transmits and receives data by using a single baseband (Baseband, BB) or a radio frequency (Radio Frequency, RF) link, and phase continuity may be ensured between the carriers. In the intra-band non-contiguous carrier aggregation or the inter-band carrier aggregation, the plurality of carriers are in different frequency bands or in a same frequency band but are not continuous between carriers, and a plurality of radio frequency modules need to be used to receive PRSs on the plurality of carriers. The terminal transmits and receives data by using a plurality of BB/RF links. The terminal converts the data received through the plurality of links into a frequency domain for splicing, and then performs positioning measurement calculation.

Optionally, the carrier aggregation manner includes a carrier aggregation manner in a first frequency band or a carrier aggregation manner in a second frequency band; and a frequency of the first frequency band is less than a frequency of the second frequency band.

The first frequency band is FR1, and a frequency range of FR1 is 450 MHz (megahertz) to 6 GHz (gigahertz). The second frequency band is FR2, and a frequency range of FR2 is 24 GHz to 52 GHz. A wavelength of an electromagnetic wave in this spectrum is most of millimeter-level.

Optionally, in a case that the carrier aggregation manner includes the intra-band contiguous carrier aggregation, a PRS on each carrier meets at least one of the following:

having a same subcarrier spacing (sub-carrier spacing, SCS);
having a same cyclic prefix (Cyclic Prefix, CP) type;
having a same reference point;
having a same PRS periodicity;
having a same slot (slot) offset within a PRS periodicity;
having a same PRS resource repetition factor;
having a same system frame number (System Frame Number, SFN);
being in a same slot slot;
being on a same symbol (symbol);
having a same comb size (comb size); or
having a same PRS sequence.

The reference point may be a Point A.

For example, in a case that the carrier aggregation manner includes the intra-band contiguous carrier aggregation, when configuring a PRS on each carrier, the network side device needs to ensure that the PRS on each carrier meets at least one of the following: having a same subcarrier spacing SCS, having a same cyclic prefix CP type, having a same reference point, having a same PRS periodicity, having a same slot offset within a PRS periodicity, having a same PRS resource repetition factor, having a same system frame number SFN, being in a same slot slot, being on a same symbol, having a same comb size, and having a same PRS sequence. In this way, the terminal may use a same radio frequency module to receive and parse the PRS on each carrier at a same time point.

According to the positioning reference signal PRS measurement method provided in this embodiment of this application, in a case that the carrier aggregation manner includes the intra-band contiguous carrier aggregation, if the PRS on each carrier has one or more of the foregoing characteristics, the terminal may receive and parse the PRS on each carrier at the same time point based on the same radio frequency module. This may be applicable to a terminal configured with only one radio frequency module.

Optionally, FIG. 3 is a second schematic flowchart of a positioning reference signal PRS measurement method according to an embodiment of this application. As shown in FIG. 3, before step 201, the method further includes the following step:

Step 202: The terminal sends first capability information of the terminal to a network side device in a case that the carrier aggregation manner includes the intra-band contiguous carrier aggregation.

The first capability information of the terminal includes at least one of the following:

a frequency band in which the terminal supports positioning by using multi-carrier aggregation;
a quantity of carriers on which the terminal supports positioning by using multi-carrier aggregation; and
a maximum bandwidth on which the terminal supports positioning by using multi-carrier aggregation.

For example, in a case that the carrier aggregation manner includes the intra-band contiguous carrier aggregation, if the terminal needs to receive PRSs on a plurality of carriers sent by the network side device, the terminal needs to first send first capability information of the terminal to the network side device. The first capability information includes at least one of the following: a frequency band in which the terminal supports positioning by using multi-carrier aggregation, a quantity of carriers on which the terminal supports positioning by using multi-carrier aggregation, and a maximum bandwidth on which the terminal supports positioning by using multi-carrier aggregation. This helps the network side device determine, based on the first capability information of the terminal when receiving the first capability information sent by the terminal, a quantity of carriers configured for the terminal to carry the PRSs, a frequency band of the carrier, a bandwidth, and the like, and configure the PRSs on the plurality of carriers for the terminal based on the determined quantity of carriers used for carrying the PRSs, the determined frequency band of the carrier, the determined bandwidth, and the like.

According to the positioning reference signal PRS measurement method provided in this embodiment of this application, in a case that the carrier aggregation manner includes the intra-band contiguous carrier aggregation, the terminal first sends the first capability information of the terminal to the network side device, so that the network side device configures PRSs on a plurality of carriers for the terminal based on the first capability information of the terminal. This avoids a case that the terminal is incapable of processing the PRSs on the plurality of carriers configured by the network side device, thereby achieving proper utilization of resources.

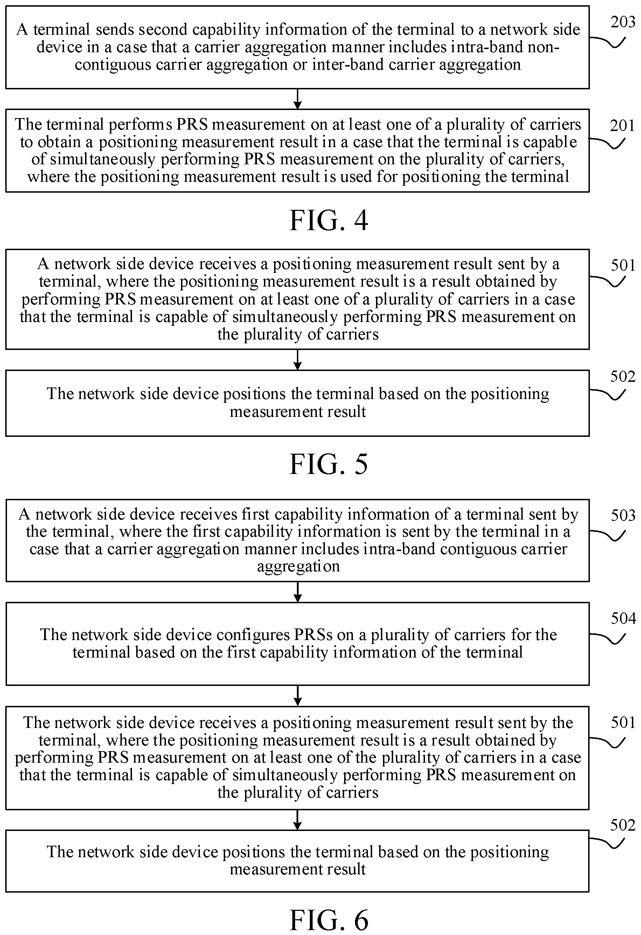

Optionally, FIG. 4 is a third schematic flowchart of a positioning reference signal PRS measurement method according to an embodiment of this application. As shown in FIG. 4, before step 201, the method further includes the following step:

Step 203: The terminal sends second capability information of the terminal to a network side device in a case that the carrier aggregation manner includes the intra-band non-contiguous carrier aggregation or the inter-band carrier aggregation.

The second capability information of the terminal includes at least one of the following:

a frequency band in which the terminal supports positioning by using multi-carrier aggregation;
a quantity of carriers on which the terminal supports positioning by using multi-carrier aggregation;
a maximum bandwidth on which the terminal supports positioning by using multi-carrier aggregation;
a timing difference (timing error) between carriers;
a frequency difference (frequency error) between carriers;
a phase difference (phase error) between carriers; and
a power difference between carriers.

For example, in a case that the carrier aggregation manner includes the intra-band non-contiguous carrier aggregation or the inter-band carrier aggregation, because the plurality of carriers are in different frequency bands, or are discontinuous in a same frequency band, a plurality of radio frequency modules need to be used to receive the PRSs on the plurality of carriers. Therefore, in this case, a timing difference between every two carriers, a frequency difference between every two carriers, a phase difference between every two carriers, and a power difference between every two carriers in the plurality of carriers need to be determined. Then, the second capability information of the terminal is sent to the network side device. The second capability information includes at least one of the following: a frequency band in which the terminal supports positioning by using multi-carrier aggregation, a quantity of carriers on which the terminal supports positioning by using multi-carrier aggregation, a maximum bandwidth on which the terminal supports positioning by using multi-carrier aggregation, a timing difference between carriers, a frequency difference between carriers, a phase difference between carriers, and a power difference between carriers. This helps the network side device determine, based on the second capability information of the terminal when receiving the second capability information sent by the terminal, a quantity of carriers configured for the terminal to carry the PRSs, a frequency band of the carrier, a bandwidth, and the like, and configure the PRSs on the plurality of carriers for the terminal based on the determined quantity of carriers used for carrying the PRSs, the determined frequency band of the carrier, the determined bandwidth, and the like.

It should be noted that when the network side device determines, based on the second capability information of the terminal, a quantity of carriers configured for the terminal to carry the PRSs, a frequency band of the carrier, a bandwidth, and the like, the network side device determines them based on at least one of the frequency band in which the terminal supports positioning by using multi-carrier aggregation, the quantity of carriers on which the terminal supports positioning by using multi-carrier aggregation, and the maximum bandwidth on which the terminal supports positioning by using multi-carrier aggregation in the second capability information. The timing difference between carriers, the frequency difference between carriers, the phase difference between carriers, and the power difference between carriers in the second capability information are used for determining precision of the received positioning measurement result.

According to the positioning reference signal PRS measurement method provided in this embodiment of this application, in a case that the carrier aggregation manner includes the intra-band non-contiguous carrier aggregation or the inter-band carrier aggregation, the terminal first sends the second capability information of the terminal to the network side device, so that the network side device configures PRSs on a plurality of carriers for the terminal based on the second capability information of the terminal. This avoids a case that the terminal is incapable of processing the PRSs on the plurality of carriers configured by the network side device, thereby achieving proper utilization of resources.

Optionally, the at least one carrier is more than one carrier. In a case that the carrier aggregation manner includes the intra-band non-contiguous carrier aggregation or the inter-band carrier aggregation, that the terminal performs PRS measurement on at least one of the plurality of carriers to obtain a positioning measurement result may be specifically implemented in the following manners:

The terminal performs PRS measurement on a plurality of carriers that do not meet at least one of the following conditions, to obtain the positioning measurement result:

a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.

The first threshold is a maximum timing difference allowed between the carriers. The second threshold is a maximum frequency difference allowed between the carriers. The third threshold is a maximum phase difference allowed between the carriers. The fourth threshold is a maximum power difference allowed between the carriers.

The maximum timing difference allowed is a set maximum timing difference that satisfies positioning precision. The maximum frequency difference allowed is a set maximum frequency difference that satisfies positioning precision. The maximum phase difference allowed is a set maximum phase difference that satisfies positioning precision. The maximum power difference allowed is a set maximum power difference that satisfies positioning precision.

For example, when intending to simultaneously measure PRSs on a plurality of carriers, the terminal may first compare a timing difference between every two carriers in the plurality of carriers with the first threshold, compare a frequency difference between every two carriers with the second threshold, compare a phase difference between every two carriers with the third threshold, and compare a power difference between every two carriers with the fourth threshold. If at least one of the following conditions is not met: a timing difference between the carriers is greater than or equal to the first threshold, a frequency difference between the carriers is greater than or equal to the second threshold, a phase difference between the carriers is greater than or equal to the third threshold, or a power difference between the carriers is greater than or equal to the fourth threshold, it indicates that the terminal may perform joint measurement on the PRSs on the plurality of carriers, that is, combine the PRSs on the plurality of carriers and measure the combined PRSs, to obtain the positioning measurement result.

It should be noted that when the carrier aggregation manner includes the intra-band non-contiguous carrier aggregation or the inter-band carrier aggregation, the terminal may receive PRSs on a plurality of carriers at different time points, combine the PRSs on the plurality of carriers when all the PRSs on the plurality of carriers are received, and measure the combined PRSs. Because the PRSs on the plurality of carriers do not need to be received simultaneously, there is no need to restrict the PRSs on all the carriers to have a same SCS, have a same CP type, have a same reference point, have a same PRS periodicity, have a same slot (slot) offset within a PRS periodicity, have a same PRS resource repetition factor, have a same system frame number, be in a same slot slot, be on a same symbol (symbol), have a same comb size, have a same PRS sequence, or the like.

According to the positioning reference signal PRS measurement method provided in this embodiment of this application, in a case that the carrier aggregation manner includes the intra-band non-contiguous carrier aggregation or the inter-band carrier aggregation, when at least one of the following conditions is not met: a timing difference between carriers is greater than or equal to the first threshold, a frequency difference between carriers is greater than or equal to the second threshold, a phase difference between carriers is greater than or equal to the third threshold, and a power difference between carriers is greater than or equal to the fourth threshold, the terminal performs joint measurement on PRSs on a plurality of carriers that do not meet the at least one condition, to obtain the positioning measurement result, so as to improve precision of the positioning measurement result.

Optionally, the at least one carrier is more than one carrier. In a case that the carrier aggregation manner includes the intra-band non-contiguous carrier aggregation or the inter-band carrier aggregation, the method further includes: The terminal skips performing PRS measurement on a plurality of carriers that meet at least one of the following conditions. Alternatively, the terminal performs PRS measurement on a plurality of carriers that meet at least one of the following conditions, to obtain the positioning measurement result, where the positioning measurement result is not used for positioning the terminal:

a timing difference between the carriers is greater than or equal to the first threshold;
a frequency difference between the carriers is greater than or equal to the second threshold;
a phase difference between the carriers is greater than or equal to the third threshold; and
a power difference between the carriers is greater than or equal to the fourth threshold.

The first threshold is a maximum timing difference allowed between the carriers. The second threshold is a maximum frequency difference allowed between the carriers. The third threshold is a maximum phase difference allowed between the carriers. The fourth threshold is a maximum power difference allowed between the carriers.

For example, if at least one of the following conditions is met: the timing difference between the carriers is greater than or equal to the first threshold, the frequency difference between the carriers is greater than or equal to the second threshold, the phase difference between the carriers is greater than or equal to the third threshold, and the power difference between the carriers is greater than or equal to the fourth threshold, it indicates that the precision of the positioning measurement result obtained by jointly measuring the PRSs on the plurality of carriers is relatively low. In this case, the terminal may not measure PRSs on the plurality of carriers that meet the at least one condition, and consequently, no positioning measurement result is obtained.

Alternatively, the terminal may perform joint measurement on PRSs on the plurality of carriers that meet the at least one condition, that is, combine the PRSs on the plurality of carriers and measure the combined PRSs to obtain the positioning measurement result, and send the positioning measurement result to the network side device. However, the network side device may determine, based on the previously received second capability information of the terminal (the timing difference between the carriers is greater than or equal to the first threshold, the frequency difference between the carriers is greater than or equal to the second threshold, the phase difference between the carriers is greater than or equal to the third threshold, or the power difference between the carriers is greater than or equal to the fourth threshold), that the precision of the positioning measurement result sent by the terminal is relatively low. Even if the positioning measurement result is received, the terminal is not positioned based on the received positioning measurement result.

According to the positioning reference signal PRS measurement method provided in this embodiment of this application, in a case that the carrier aggregation manner includes the intra-band non-contiguous carrier aggregation or the inter-band carrier aggregation, if at least one of the following conditions is met: the timing difference between the carriers is greater than or equal to the first threshold, the frequency difference between the carriers is greater than or equal to the second threshold, the phase difference between the carriers is greater than or equal to the third threshold, and the power difference between the carriers is greater than or equal to the fourth threshold, the terminal may not perform PRS measurement on a plurality of carriers that meet the at least one condition, and consequently, no positioning measurement result is obtained. In this case, there is no need to send a positioning measurement result to the network side device, thereby saving network resources.

Optionally, that the terminal performs PRS measurement on the at least one of the plurality of carriers may be specifically implemented in the following two manners:

In a first manner, for each of the carrier aggregation manners, the terminal performs PRS measurement on one of the plurality of carriers to obtain the positioning measurement result.

Specifically, the terminal performs PRS measurement on the one of the plurality of carriers based on at least one of the following parameters: a subcarrier spacing SCS, a bandwidth (Bandwidth), a signal-to-noise ratio (SNR), and a total quantity of PRS resources.

For example, for any carrier aggregation manner in the intra-band contiguous carrier aggregation, the intra-band non-contiguous carrier aggregation, and the inter-band carrier aggregation, the terminal may perform PRS measurement on one of the plurality of carriers based on at least one of the following parameters of each carrier: a subcarrier spacing SCS, a bandwidth, a signal-to-noise ratio, and a total quantity of PRS resources, and directly use an obtained measurement result as the positioning measurement result. Specifically, which carrier is selected from the plurality of carriers may be determined by the terminal. This is not limited in this application. Values of the foregoing four parameters: the subcarrier spacing SCS, the bandwidth, the signal-to-noise ratio, and the total quantity of PRS resources, all affect measurement precision of the PRS. Larger values of the parameters indicate higher PRS measurement precision. For example, it is assumed that the plurality of carriers include a carrier 1 and a carrier 2, an SCS of the carrier 1 is 40 KHZ (kilohertz), and an SCS of the carrier 2 is 20 KHZ. In this case, PRS measurement is performed on the carrier 1.

In a second manner, for each of the carrier aggregation manners, the terminal performs PRS measurement on the plurality of carriers to obtain a measurement result corresponding to each PRS, and determines the positioning measurement result based on a measurement result corresponding to at least one of the plurality of PRSs.

Specifically, the terminal performs PRS measurement on the one of the plurality of carriers based on at least one of the following parameters: a subcarrier spacing SCS, a bandwidth, a signal-to-noise ratio, and a total quantity of PRS resources.

For example, for any carrier aggregation manner in the intra-band contiguous carrier aggregation, the intra-band non-contiguous carrier aggregation, and the inter-band carrier aggregation, the terminal may perform PRS measurement on one of the plurality of carriers, and directly use an obtained measurement result as the positioning measurement result. Alternatively, the terminal separately performs PRS measurement on a plurality of carriers to obtain a measurement result corresponding to each PRS, and then selects a measurement result with relatively high precision from the measurement results corresponding to all the PRSs as the positioning measurement result, or averages or weights the measurement results corresponding to all the PRSs to obtain the positioning measurement result.

According to the positioning reference signal PRS measurement method provided in this embodiment of this application, the terminal may perform PRS measurement on one of a plurality of carriers, and directly use an obtained measurement result as a positioning measurement result. The measurement is simple and time-saving. Alternatively, the terminal may separately measure PRSs on a plurality of carriers, and then select a measurement result with relatively high precision from measurement results corresponding to all the PRSs as a positioning measurement result, or average or weight measurement results corresponding to all the PRSs to obtain a positioning measurement result. This improves precision of the positioning measurement result and further improves precision of positioning the terminal based on the positioning measurement result.

Optionally, the total quantity of PRS resources is determined based on the following parameters: a PRS resource repetition factor, a quantity of symbols occupied by the PRS resource, and a comb size of the PRS resource.

For example, the total quantity of PRS resources is determined based on the following formula (1):

$$\text{the total quantity of PRS resources} = T_{rep}^{PRS} * L_{PRS} / K_{comb}^{PRS} \qquad (1)$$

where $T_{rep}^{PRS}$ represents the PRS resource repetition factor, $L_{PRS}$ represents the quantity of symbols occupied by the PRS resource, and $K_{comb}^{PRS}$ represents the comb size of the PRS resource.

Optionally, that the terminal performs PRS measurement on the at least one of the plurality of carriers may be specifically further implemented in the following manner:

The terminal performs PRS measurement on the at least one of the plurality of carriers based on PRS measurement time.

The PRS measurement time is determined based on the following parameters: a PRS periodicity, a duration of an available PRS resource, and a maximum quantity of PRS resources in a slot. The PRS periodicity is a least common multiple of PRS periodicities on all carriers. The duration of the available PRS resource is a largest value among durations of PRS resources on all carriers. The maximum quantity of PRS resources in the slot is a largest value among quantities of PRS resources in all slots on all carriers.

For example, the terminal needs to complete the PRS measurement on the at least one of the plurality of carriers during preset PRS measurement time, for example, measurement time corresponding to the RSTD, measurement time corresponding to the receiving and sending time difference, measurement time corresponding to the PRS-RSRP, measurement time corresponding to the PRS-RSRPP, and measurement time corresponding to the carrier phase. It is required to complete the measurement of the corresponding parameter within the measurement time, and particular measurement precision further needs to be ensured.

According to the positioning reference signal PRS measurement method provided in this embodiment of this application, the terminal may perform PRS measurement on at least one of a plurality of carriers based on the PRS measurement time, so as to ensure measurement validity.

Optionally, after step 201, the method further includes the following step:

sending, by the terminal, the positioning measurement result to the network side device.

FIG. 5 is a fourth schematic flowchart of a positioning reference signal PRS measurement method according to an embodiment of this application. As shown in FIG. 5, the method includes the following step 501 and step 502:

Step 501: A network side device receives a positioning measurement result sent by a terminal, where the positioning measurement result is a result obtained by performing PRS measurement on at least one of a plurality of carriers in a case that the terminal is capable of simultaneously performing PRS measurement on the plurality of carriers.

Step 502: The network side device positions the terminal based on the positioning measurement result.

According to the positioning reference signal PRS measurement method provided in this embodiment of this application, in a case that the terminal has a capability of simultaneously performing PRS measurement on a plurality of carriers, the terminal performs PRS measurement on at least one of the plurality of carriers, and a positioning measurement result obtained through measurement is used for positioning the terminal. This implements a measurement method for applying PRSs on a plurality of carriers to terminal positioning.

Optionally, the positioning measurement result includes at least one of the following:

a reference signal time difference RSTD;

a receiving and sending time difference between receiving a PRS and sending an uplink reference signal by the terminal;

positioning reference signal-reference signal received power PRS-RSRP;

positioning reference signal-reference signal received path power PRS-RSRPP; or

a carrier phase.

Optionally, a carrier aggregation manner of the plurality of carriers includes one of the following:

intra-band contiguous carrier aggregation;

intra-band non-contiguous carrier aggregation; or

inter-band carrier aggregation.

Optionally, the carrier aggregation manner includes a carrier aggregation manner in a first frequency band or a carrier aggregation manner in a second frequency band; and a frequency of the first frequency band is less than a frequency of the second frequency band.

Optionally, FIG. 6 is a fifth schematic flowchart of a positioning reference signal PRS measurement method according to an embodiment of this application. As shown in FIG. 6, before step 501, the method further includes the following steps:

Step 503: The network side device receives first capability information of the terminal sent by the terminal, where the first capability information is sent by the terminal in a case that the carrier aggregation manner includes the intra-band contiguous carrier aggregation.

Step 504: The network side device configures PRSs on the plurality of carriers for the terminal based on the first capability information of the terminal.

The first capability information of the terminal includes at least one of the following: a frequency band in which the terminal supports positioning by using multi-carrier aggregation; a quantity of carriers on which the terminal supports positioning by using multi-carrier aggregation; and a maximum bandwidth on which the terminal supports positioning by using multi-carrier aggregation.

Optionally, the configuring, by the network side device, the PRSs on the plurality of carriers for the terminal based on the first capability information of the terminal meets at least one of the following:

having a same subcarrier spacing SCS;

having a same cyclic prefix CP type;

having a same reference point;

having a same PRS periodicity;

having a same slot offset within a PRS periodicity;

having a same PRS resource repetition factor;

having a same system frame number SFN;
being in a same slot slot;
being on a same symbol;
having a same comb size; or
having a same PRS sequence.

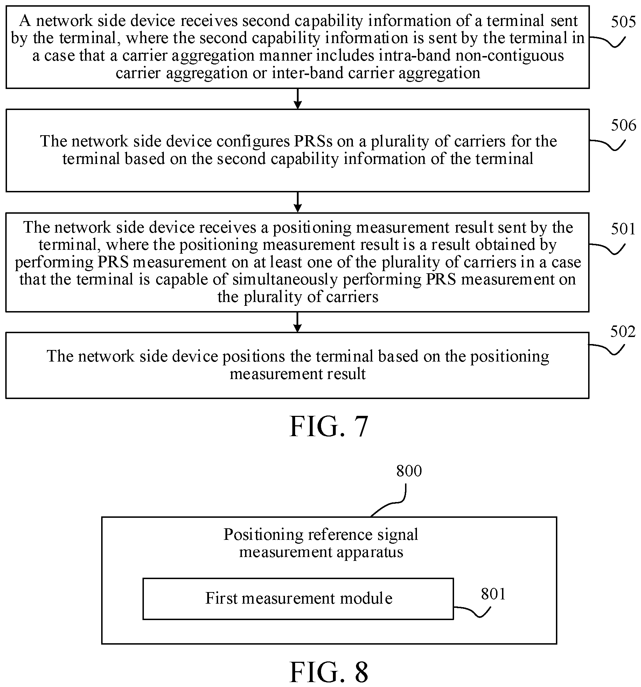

Optionally, FIG. 7 is a sixth schematic flowchart of a positioning reference signal PRS measurement method according to an embodiment of this application. As shown in FIG. 7, before step 501, the method further includes the following steps:

Step 505: The network side device receives second capability information of the terminal sent by the terminal, where the second capability information is sent by the terminal in a case that the carrier aggregation manner includes the intra-band non-contiguous carrier aggregation or the inter-band carrier aggregation.
Step 506: The network side device configures PRSs on the plurality of carriers for the terminal based on the second capability information of the terminal.

The second capability information of the terminal includes at least one of the following: a frequency band in which the terminal supports positioning by using multi-carrier aggregation; a quantity of carriers on which the terminal supports positioning by using multi-carrier aggregation; a maximum bandwidth on which the terminal supports positioning by using multi-carrier aggregation; a timing difference between carriers; a frequency difference between carriers; a phase difference between carriers; or a power difference between carriers.
Optionally, that the network side device positions the terminal based on the positioning measurement result may be specifically implemented in the following manner:
The network side device positions the terminal based on the positioning measurement result in a case that the positioning measurement result is a result obtained by the terminal by performing PRS measurement on a plurality of carriers that do not meet at least one of the following conditions:

a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.

The first threshold is a maximum timing difference allowed between the carriers. The second threshold is a maximum frequency difference allowed between the carriers. The third threshold is a maximum phase difference allowed between the carriers. The fourth threshold is a maximum power difference allowed between the carriers.
Optionally, the method further include the following step:

skipping, by the network side device, positioning the terminal based on the positioning measurement result in a case that the positioning measurement result is a result obtained by the terminal by performing PRS measurement on a plurality of carriers that meet at least one of the following conditions:
a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.

The first threshold is a maximum timing difference allowed between the carriers. The second threshold is a maximum frequency difference allowed between the carriers. The third threshold is a maximum phase difference allowed between the carriers. The fourth threshold is a maximum power difference allowed between the carriers.
A specific implementation process and technical effects of the method in this embodiment are the same as or similar to those in the method embodiment on the terminal side. For details, reference may be made to the detailed description in the method embodiment on the terminal side, and details are not described herein again.
The positioning reference signal PRS measurement method provided in this embodiment of this application may be performed by a positioning reference signal PRS measurement apparatus. In an embodiment of this application, the positioning reference signal PRS measurement apparatus provided in the embodiments of this application is described by using an example in which the positioning reference signal PRS measurement apparatus performs the positioning reference signal PRS measurement method.
FIG. 8 is a first schematic structural diagram of a positioning reference signal PRS measurement apparatus according to an embodiment of this application. The apparatus is applied to a terminal. As shown in FIG. 8, the positioning reference signal PRS measurement apparatus 800 includes:
a first measurement module 801, configured to perform PRS measurement on at least one of a plurality of carriers to obtain a positioning measurement result in a case that the terminal is capable of simultaneously performing PRS measurement on the plurality of carriers, where the positioning measurement result is used for positioning the terminal.

According to the positioning reference signal PRS measurement apparatus provided in this embodiment of this application, in a case that the terminal has a capability of simultaneously performing PRS measurement on a plurality of carriers, the terminal performs PRS measurement on at least one of the plurality of carriers, and a positioning measurement result obtained through measurement is used for positioning the terminal. This implements a measurement method for applying PRSs on a plurality of carriers to terminal positioning.

Optionally, the positioning measurement result includes at least one of the following:

a reference signal time difference RSTD;
a receiving and sending time difference between receiving a PRS and sending an uplink reference signal by the terminal;
positioning reference signal-reference signal received power PRS-RSRP;
positioning reference signal-reference signal received path power PRS-RSRPP; or
a carrier phase.

Optionally, a carrier aggregation manner of the plurality of carriers includes one of the following:

intra-band contiguous carrier aggregation;
intra-band non-contiguous carrier aggregation; or
inter-band carrier aggregation.

Optionally, the carrier aggregation manner includes a carrier aggregation manner in a first frequency band or a carrier aggregation manner in a second frequency band; and a frequency of the first frequency band is less than a frequency of the second frequency band.

Optionally, in a case that the carrier aggregation manner includes the intra-band contiguous carrier aggregation, a PRS on each carrier meets at least one of the following:

having a same subcarrier spacing SCS;
having a same cyclic prefix CP type;
having a same reference point;
having a same PRS periodicity;
having a same slot offset within a PRS periodicity;
having a same PRS resource repetition factor;
having a same system frame number SFN;
being in a same slot slot;
being on a same symbol;
having a same comb size; or
having a same PRS sequence.

Optionally, the positioning reference signal PRS measurement apparatus 800 further includes:
a first sending module, configured to send first capability information of the terminal to a network side device in a case that the carrier aggregation manner includes the intra-band contiguous carrier aggregation.

The first capability information of the terminal includes at least one of the following:

a frequency band in which the terminal supports positioning by using multi-carrier aggregation;
a quantity of carriers on which the terminal supports positioning by using multi-carrier aggregation; and
a maximum bandwidth on which the terminal supports positioning by using multi-carrier aggregation.

Optionally, the positioning reference signal PRS measurement apparatus 800 further includes:
a second sending module, configured to send second capability information of the terminal to a network side device in a case that the carrier aggregation manner includes the intra-band non-contiguous carrier aggregation or the inter-band carrier aggregation.

The second capability information of the terminal includes at least one of the following:

a frequency band in which the terminal supports positioning by using multi-carrier aggregation;

a quantity of carriers on which the terminal supports positioning by using multi-carrier aggregation;
a maximum bandwidth on which the terminal supports positioning by using multi-carrier aggregation;
a timing difference between carriers;
a frequency difference between carriers;
a phase difference between carriers; or
a power difference between carriers.

Optionally, the at least one carrier is more than one carrier. The first measurement module 801 is further configured to:

perform PRS measurement on a plurality of carriers that do not meet at least one of the following conditions, to obtain the positioning measurement result:
a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.

Optionally, the at least one carrier is more than one carrier. The positioning reference signal PRS measurement apparatus 800 further includes:

a second measurement module, configured to skip performing PRS measurement on a plurality of carriers that meet at least one of the following conditions, or perform PRS measurement on a plurality of carriers that meet at least one of the following conditions, to obtain the positioning measurement result, where the positioning measurement result is not used for positioning the terminal:
a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.

Optionally, the first threshold is a maximum timing difference allowed between the carriers;

the second threshold is a maximum frequency difference allowed between the carriers;
the third threshold is a maximum phase difference allowed between the carriers; and
the fourth threshold is a maximum power difference allowed between the carriers.

Optionally, the first measurement module 801 is further configured to:

for each of the carrier aggregation manners, perform PRS measurement on one of the plurality of carriers to obtain the positioning measurement result; or
perform PRS measurement on the plurality of carriers to obtain a measurement result corresponding to each PRS, and determine the positioning measurement result based on a measurement result corresponding to at least one of the plurality of PRSs.

Optionally, the first measurement module 801 is further configured to:

perform PRS measurement on the one of the plurality of carriers based on at least one of the following parameters:
a subcarrier spacing SCS;
a bandwidth;
a signal-to-noise ratio; and
a total quantity of PRS resources.
Optionally, the first measurement module 801 is further configured to:
perform PRS measurement on the plurality of carriers based on at least one of the following parameters:
a subcarrier spacing SCS;
a bandwidth;
a signal-to-noise ratio; and
a total quantity of PRS resources.

Optionally, the total quantity of PRS resources is determined based on the following parameters:

a PRS resource repetition factor, a quantity of symbols occupied by the PRS resource, and a comb size of the PRS resource.

Optionally, the first measurement module 801 is further configured to:
perform PRS measurement on the at least one of the plurality of carriers based on PRS measurement time.

Optionally, the PRS measurement time is determined based on the following parameters:
a PRS periodicity, a duration of an available PRS resource, and a maximum quantity of PRS resources in a slot.

The PRS periodicity is a least common multiple of PRS periodicities on all carriers.

The duration of the available PRS resource is a largest value among durations of PRS resources on all carriers.

The maximum quantity of PRS resources in the slot is a largest value among quantities of PRS resources in all slots on all carriers.

Optionally, the positioning reference signal PRS measurement apparatus 800 further includes:
a third sending module, configured to send the positioning measurement result to the network side device.

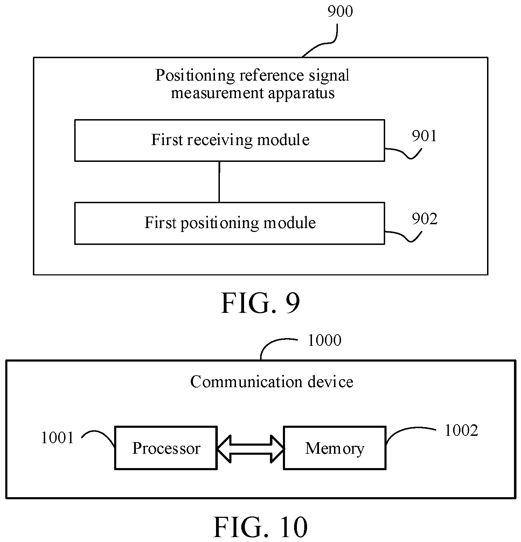

FIG. 9 is a second schematic structural diagram of a positioning reference signal PRS measurement apparatus according to an embodiment of this application. The apparatus is applied to a network side device. As shown in FIG. 9, the positioning reference signal PRS measurement apparatus 900 includes:

a first receiving module 901, configured to receive a positioning measurement result sent by a terminal, where the positioning measurement result is a result obtained by performing PRS measurement on at least one of a plurality of carriers in a case that the terminal is capable of simultaneously performing PRS measurement on the plurality of carriers; and
a first positioning module 902, configured to position the terminal based on the positioning measurement result.

According to the positioning reference signal PRS measurement apparatus provided in this embodiment of this application, in a case that the terminal has a capability of simultaneously performing PRS measurement on a plurality of carriers, the terminal performs PRS measurement on at least one of the plurality of carriers, and a positioning measurement result obtained through measurement is used for positioning the terminal. This implements a measurement method for applying PRSs on a plurality of carriers to terminal positioning.

Optionally, the positioning measurement result includes at least one of the following:

a reference signal time difference RSTD;
a receiving and sending time difference between receiving a PRS and sending an uplink reference signal by the terminal;
positioning reference signal-reference signal received power PRS-RSRP;
positioning reference signal-reference signal received path power PRS-RSRPP; or
a carrier phase.

Optionally, a carrier aggregation manner of the plurality of carriers includes one of the following:

intra-band contiguous carrier aggregation;
intra-band non-contiguous carrier aggregation; or
inter-band carrier aggregation.

Optionally, the carrier aggregation manner includes a carrier aggregation manner in a first frequency band or a carrier aggregation manner in a second frequency band; and a frequency of the first frequency band is less than a frequency of the second frequency band.

Optionally, the positioning reference signal PRS measurement apparatus 900 further includes:

a second receiving module, configured to receive first capability information of the terminal sent by the terminal, where the first capability information is sent by the terminal in a case that the carrier aggregation manner includes the intra-band contiguous carrier aggregation; and
a first configuration module, configured to configure the PRSs on the plurality of carriers for the terminal based on the first capability information of the terminal.

The first capability information of the terminal includes at least one of the following:

a frequency band in which the terminal supports positioning by using multi-carrier aggregation;
a quantity of carriers on which the terminal supports positioning by using multi-carrier aggregation; and
a maximum bandwidth on which the terminal supports positioning by using multi-carrier aggregation.

Optionally, the first configuration module is further configured to:

configure the PRSs on the plurality of carriers for the terminal based on the first capability information of the terminal to meet at least one of the following:
having a same subcarrier spacing SCS;
having a same cyclic prefix CP type;
having a same reference point;
having a same PRS periodicity;
having a same slot offset within a PRS periodicity;
having a same PRS resource repetition factor;
having a same system frame number SFN;
being in a same slot slot;
being on a same symbol;
having a same comb size; or
having a same PRS sequence.

Optionally, the positioning reference signal PRS measurement apparatus 900 further includes:

a third receiving module, configured to receive second capability information of the terminal sent by the terminal, where the second capability information is sent by the terminal in a case that the carrier aggregation manner includes the intra-band non-contiguous carrier aggregation or the inter-band carrier aggregation; and
a second configuration module, configured to configure the PRSs on the plurality of carriers for the terminal based on the second capability information of the terminal.

The second capability information of the terminal includes at least one of the following:

a frequency band in which the terminal supports positioning by using multi-carrier aggregation;
a quantity of carriers on which the terminal supports positioning by using multi-carrier aggregation;
a maximum bandwidth on which the terminal supports positioning by using multi-carrier aggregation;
a timing difference between carriers;
a frequency difference between carriers;
a phase difference between carriers; or
a power difference between carriers.

Optionally, the first positioning module 902 is further configured to:

position the terminal based on the positioning measurement result in a case that the positioning measurement result is a result obtained by the terminal by performing PRS measurement on a plurality of carriers that do not meet at least one of the following conditions:
a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.

Optionally, the positioning reference signal PRS measurement apparatus 900 further includes:

a second positioning module, configured to skip positioning the terminal based on the positioning measurement result in a case that the positioning measurement result is a result obtained by the terminal by performing PRS measurement on a plurality of carriers that meet at least one of the following conditions:
a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.
Optionally, the first threshold is a maximum timing difference allowed between the carriers;
the second threshold is a maximum frequency difference allowed between the carriers;
the third threshold is a maximum phase difference allowed between the carriers; and
the fourth threshold is a maximum power difference allowed between the carriers.

The positioning reference signal PRS measurement apparatus in this embodiment of this application may be an electronic device, for example, an electronic device with an operating system, or may be a component in an electronic device, for example, an integrated circuit or a chip. The electronic device may be a terminal, or may be another device other than a terminal. For example, the terminal may include, but is not limited to, the types of the terminal 11 listed above, and the another device may be a server, a network attached storage (Network Attached Storage, NAS), or the like. This is not specifically limited in this embodiment of this application.

The positioning reference signal PRS measurement apparatus provided in this embodiment of this application can implement the processes implemented in the method embodiments of FIG. 2 to FIG. 7 and achieve the same technical effects. To avoid repetition, details are not described herein again.

Optionally, as shown in FIG. 10, an embodiment of this application further provides a communication device 1000, including a processor 1001 and a memory 1002. The memory 1002 stores a program or an instruction runnable on the processor 1001. For example, when the communication device 1000 is a terminal, the program or the instruction, when executed by the processor 1001, implements the steps of the foregoing embodiment of the positioning reference signal PRS measurement method, and the same technical effects can be achieved. When the communication device 1000 is a network side device, the program or the instruction, when executed by the processor 1001, implements the steps of the foregoing embodiment of the positioning reference signal PRS measurement method, and the same technical effects can be achieved. To avoid repetition, details are not described herein again.

An embodiment of this application further provides a terminal, including a processor and a communication interface. The processor is configured to perform PRS measurement on at least one of a plurality of carriers to obtain a positioning measurement result in a case that the terminal is capable of simultaneously performing PRS measurement on the plurality of carriers. The positioning measurement result is used for positioning the terminal. This terminal embodiment corresponds to the foregoing terminal-side method embodiment. Implementation processes and implementations of the foregoing method embodiment all may be applied to this terminal embodiment, and the same technical effects can be achieved.

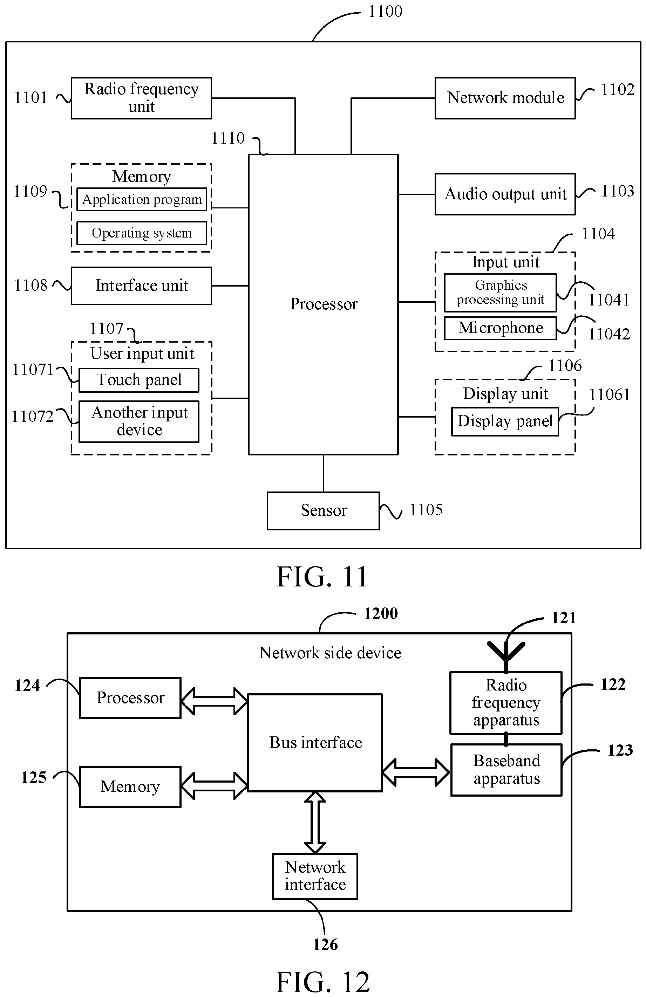

Specifically, FIG. 11 is a schematic diagram of a hardware structure of a terminal that implements an embodiment of this application.

The terminal 1100 includes, but is not limited to: at least some components in a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that, the terminal 1100 may further include a power supply (such as a battery) for supplying power to each component. The power supply may be logically connected to the processor 1110 by using a power management system, thereby implementing functions, such as charging, discharging, and power consumption management, by using the power management system. The terminal structure shown in FIG. 11 constitutes no limitation on the terminal. The terminal may include more or fewer components than those shown in the figure, or some components may be combined, or a different component deployment may be used. Details are not described herein.

It should be understood that in this embodiment of this application, the input unit 1104 may include a graphics processing unit (Graphics Processing Unit, GPU) 11041 and a microphone 11042. The graphics processing unit 11041 processes image data of still pictures or videos captured by an image capture apparatus (such as a camera) in a video capture mode or an image capture mode. The display unit 1106 may include a display panel 11061. The display panel 11061 may be configured in a form of a liquid crystal display, an organic light-emitting diode, or the like. The user input unit 1107 includes at least one of a touch panel 11071 and another input device 11072. The touch panel 11071 is also referred to as a touchscreen. The touch panel 11071 may include two parts: a touch detection apparatus and a touch controller. The another input device 11072 may include, but is not limited to, a physical keyboard, a functional button (such as a sound volume control button or a power button), a trackball, a mouse, or a joystick. Details are not described herein.

In this embodiment of this application, after receiving downlink data from a network side device, the radio frequency unit 1101 may transmit the downlink data to the processor 1110 for processing. In addition, the radio frequency unit 1101 may send uplink data to the network side device. Usually, the radio frequency unit 1101 includes, but is not limited to, an antenna, an amplifier, a transceiver, a coupler, a low noise amplifier, a duplexer, and the like.

The memory 1109 may be configured to store a software program or instruction and various data. The memory 1109 may mainly include a first storage area storing a program or an instruction and a second storage area storing data. The first storage area may store an operating system, an application program or an instruction required by at least one function (for example, a sound playing function or an image playing function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1109 in this embodiment of this application includes, but is not limited to, these memories and any other suitable types of memories.

The processor 1110 may include one or more processing units. Optionally, the processor 1110 integrates an application processor and a modem processor. The application processor mainly processes operations related to the operating system, a user interface, the application program, and the like. The modem processor mainly processes a wireless communication signal, and is, for example, a baseband processor. It may be understood that the modem processor may alternatively not be integrated in the processor 1110.

The processor 1110 is configured to perform PRS measurement on at least one of a plurality of carriers to obtain a positioning measurement result in a case that the terminal is capable of simultaneously performing PRS measurement on the plurality of carriers. The positioning measurement result is used for positioning the terminal.

In this embodiment of this application, in a case that the terminal has a capability of simultaneously performing PRS measurement on a plurality of carriers, the terminal performs PRS measurement on at least one of the plurality of carriers, and a positioning measurement result obtained through measurement is used for positioning the terminal. This implements a measurement method for applying PRSs on a plurality of carriers terminal positioning.

Optionally, the positioning measurement result includes at least one of the following:

a reference signal time difference RSTD;
a receiving and sending time difference between receiving a PRS and sending an uplink reference signal by the terminal;
positioning reference signal-reference signal received power PRS-RSRP;
positioning reference signal-reference signal received path power PRS-RSRPP; or
a carrier phase.

Optionally, a carrier aggregation manner of the plurality of carriers includes one of the following:

intra-band contiguous carrier aggregation;
intra-band non-contiguous carrier aggregation; or
inter-band carrier aggregation.

Optionally, the carrier aggregation manner includes a carrier aggregation manner in a first frequency band or a carrier aggregation manner in a second frequency band; and a frequency of the first frequency band is less than a frequency of the second frequency band.

Optionally, in a case that the carrier aggregation manner includes the intra-band contiguous carrier aggregation, a PRS on each carrier meets at least one of the following:

having a same subcarrier spacing SCS;
having a same cyclic prefix CP type;
having a same reference point;
having a same PRS periodicity;
having a same slot offset within a PRS periodicity;
having a same PRS resource repetition factor;
having a same system frame number SFN;
being in a same slot slot;
being on a same symbol;
having a same comb size; or
having a same PRS sequence.

In this embodiment of this application, in a case that the carrier aggregation manner includes the intra-band contiguous carrier aggregation, if the PRS on each carrier has one or more of the foregoing characteristics, the terminal may receive and parse the PRS on each carrier at the same time point based on the same radio frequency module. This may be applicable to a terminal configured with only one radio frequency module.

Optionally, the radio frequency unit 1101 is configured to send first capability information of the terminal to the network side device in a case that the carrier aggregation manner includes the intra-band contiguous carrier aggregation.

The first capability information of the terminal includes at least one of the following:

a frequency band in which the terminal supports positioning by using multi-carrier aggregation;
a quantity of carriers on which the terminal supports positioning by using multi-carrier aggregation; and
a maximum bandwidth on which the terminal supports positioning by using multi-carrier aggregation.

In this embodiment of this application, in a case that the carrier aggregation manner includes the intra-band contiguous carrier aggregation, the terminal first sends the first capability information of the terminal to the network side device, so that the network side device configures PRSs on a plurality of carriers for the terminal based on the first capability information of the terminal. This avoids a case that the terminal is incapable of processing the PRSs on the plurality of carriers configured by the network side device, thereby achieving proper utilization of resources.

Optionally, the radio frequency unit 1101 is further configured to send second capability information of the terminal to the network side device in a case that the carrier aggregation manner includes the intra-band non-contiguous carrier aggregation or the inter-band carrier aggregation.

The second capability information of the terminal includes at least one of the following:

a frequency band in which the terminal supports positioning by using multi-carrier aggregation;
a quantity of carriers on which the terminal supports positioning by using multi-carrier aggregation;
a maximum bandwidth on which the terminal supports positioning by using multi-carrier aggregation;
a timing difference between carriers;
a frequency difference between carriers;
a phase difference between carriers; or
a power difference between carriers.

In this embodiment of this application, in a case that the carrier aggregation manner includes the intra-band non-contiguous carrier aggregation or the inter-band carrier aggregation, the terminal first sends the second capability information of the terminal to the network side device, so that the network side device configures PRSs on a plurality of carriers for the terminal based on the second capability information of the terminal. This avoids a case that the terminal is incapable of processing the PRSs on the plurality of carriers configured by the network side device, thereby achieving proper utilization of resources.

Optionally, the at least one carrier is more than one carrier. The processor 1110 is further configured to:

perform PRS measurement on a plurality of carriers that do not meet at least one of the following conditions, to obtain the positioning measurement result:
a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.

In this embodiment of this application, when at least one of the following conditions is not met: a timing difference between carriers is greater than or equal to a first threshold, a frequency difference between carriers is greater than or equal to a second threshold, a phase difference between carriers is greater than or equal to a third threshold, and a power difference between carriers is greater than or equal to a fourth threshold, the terminal separately performs PRS measurement on a plurality of carriers that do not meet the at least one condition, to obtain a positioning measurement result. In this way, a more accurate measurement result can be selected from measurement results corresponding to PRSs on all the carriers as the positioning measurement result. Alternatively, measurement results corresponding to PRSs on all the carriers may be weighted or the like to obtain a positioning measurement result. In this way, accuracy of the positioning measurement result is improved, and thus accuracy of positioning the terminal based on the positioning measurement result is further improved.

Optionally, the at least one carrier is more than one carrier. The processor 1110 is further configured to:
skip performing PRS measurement on a plurality of carriers that meet at least one of the following conditions, or perform PRS measurement on a plurality of carriers that meet at least one of the following conditions, to obtain the positioning measurement result, where the positioning measurement result is not used for positioning the terminal:

a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.

Optionally, the first threshold is a maximum timing difference allowed between the carriers;

the second threshold is a maximum frequency difference allowed between the carriers;
the third threshold is a maximum phase difference allowed between the carriers; and
the fourth threshold is a maximum power difference allowed between the carriers.

In this embodiment of this application, if at least one of the following conditions is met: a timing difference between carriers is greater than or equal to a first threshold, a frequency difference between carriers is greater than or equal to a second threshold, a phase difference between carriers is greater than or equal to a third threshold, and a power difference between carriers is greater than or equal to a fourth threshold, the terminal may not perform PRS measurement on a plurality of carriers that meet the at least one condition, and consequently, no positioning measurement result is obtained. In this case, there is no need to send a positioning measurement result to the network side device, thereby saving network resources.

Optionally, the processor 1110 is further configured to:

for each of the carrier aggregation manners, perform PRS measurement on one of the plurality of carriers to obtain the positioning measurement result; or
perform PRS measurement on the plurality of carriers to obtain a measurement result corresponding to each PRS, and determine the positioning measurement result based on a measurement result corresponding to at least one of the plurality of PRSs.

Optionally, the processor 1110 is further configured to:

perform PRS measurement on the one of the plurality of carriers based on at least one of the following parameters:
a subcarrier spacing SCS;
a bandwidth;
a signal-to-noise ratio; and
a total quantity of PRS resources.

Optionally, the processor 1110 is further configured to:

perform PRS measurement on the plurality of carriers based on at least one of the following parameters:
a subcarrier spacing SCS;
a bandwidth;
a signal-to-noise ratio; and
a total quantity of PRS resources.

In this embodiment of this application, the terminal may perform PRS measurement on one of a plurality of carriers, and directly use an obtained measurement result as a positioning measurement result. The measurement is simple and time-saving. Alternatively, the terminal may separately perform PRS measurement on a plurality of carriers, and then select a measurement result with relatively high precision from measurement results corresponding to all PRSs as a positioning measurement result, or average or weight measurement results corresponding to all PRSs to obtain a positioning measurement result. This improves precision of the positioning measurement result and further improves precision of positioning the terminal based on the positioning measurement result.

Optionally, the total quantity of PRS resources is determined based on the following parameters:
a PRS resource repetition factor, a quantity of symbols occupied by the PRS resource, and a comb size of the PRS resource.

Optionally, the processor 1110 is further configured to:
perform PRS measurement on the at least one of the plurality of carriers based on PRS measurement time.

Optionally, the PRS measurement time is determined based on the following parameters:
a PRS periodicity, a duration of an available PRS resource, and a maximum quantity of PRS resources in a slot.

The PRS periodicity is a least common multiple of PRS periodicities on all carriers.

The duration of the available PRS resource is a largest value among durations of PRS resources on all carriers.

The maximum quantity of PRS resources in the slot is a largest value among quantities of PRS resources in all slots on all carriers.

In this embodiment of this application, the terminal may perform PRS measurement on at least one of a plurality of carriers based on PRS measurement time, so as to ensure measurement validity.

Optionally, the radio frequency unit 1101 is further configured to:
send the positioning measurement result to the network side device.

An embodiment of this application further provides a network side device, including a processor and a communication interface. The communication interface is configured to receive a positioning measurement result sent by a terminal. The positioning measurement result is a result obtained by performing PRS measurement on at least one of a plurality of carriers in a case that the terminal is capable of simultaneously performing PRS measurement on the plurality of carriers. The processor is configured to position the terminal based on the positioning measurement result. This network side device embodiment corresponds to the foregoing network side device method embodiment. Implementation processes and implementations of the foregoing method embodiment may all be applied to this network side device embodiment, and the same technical effects can be achieved.

Specifically, an embodiment of this application further provides a network side device. As shown in FIG. 12, the network side device 1200 includes: an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information through the antenna 121, and sends the received information to the baseband apparatus 123 for processing. In a downlink direction, the baseband apparatus 123 processes and sends to-be-sent information to the radio frequency apparatus 122, and the radio frequency apparatus 122 processes received information and sends out the information through the antenna 121.

The method performed by the network side device in the foregoing embodiment may be implemented in the baseband apparatus 123. The baseband apparatus 123 includes a baseband processor.

The baseband apparatus 123 may include, for example, at least one baseband board. A plurality of chips are disposed on the baseband board. As shown in FIG. 12, one chip is, for example, the baseband processor, and is connected to the memory 125 through a bus interface, to call a program in the memory 125 to perform the operations of the network device shown in the foregoing method embodiment.

The network side device may further include a network interface 126. The interface is, for example, a common public radio interface (common public radio interface, CPRI).

Specifically, the network side device 1200 of this embodiment of the present invention further includes: an instruction or a program stored in the memory 125 and runnable on the processor 124. The processor 124 calls the instruction or the program in the memory 125 to perform the method performed by each module shown in FIG. 9, and the same technical effects are achieved. To avoid repetition, details are not described herein again.

An embodiment of this application further provides a readable storage medium, where the readable storage medium stores a program or an instruction, and the program or the instruction, when executed by a processor, implements the processes of the foregoing positioning reference signal PRS measurement method embodiment, and the same technical effects can be achieved. To avoid repetition, details are not described herein again.

The processor is the processor in the terminal described in the foregoing embodiment. The readable storage medium includes a computer-readable storage medium, such as a computer read-only memory ROM, a random access memory RAM, a magnetic disk, or an optical disc.

An embodiment of this application further provides a chip, where the chip includes a processor and a communication interface. The communication interface is coupled to the processor. The processor is configured to run a program or an instruction to implement the processes of the foregoing positioning reference signal PRS measurement method embodiment, and the same technical effects can be achieved. To avoid repetition, details are not described herein again.

It should be understood that, the chip mentioned in this embodiment of this application may also be referred to as a system on a chip, a system chip, a chip system, a system-on-chip, or the like.

An embodiment of this application further provides a computer program/program product. The computer program/program product is stored in a storage medium and is executed by at least one processor to implement the processes of the foregoing positioning reference signal PRS measurement method embodiment, and the same technical effects can be achieved. To avoid repetition, details are not described herein again.

An embodiment of this application further provides a positioning reference signal PRS measurement system, including: a terminal and a network side device. The terminal may be configured to perform the steps of the positioning reference signal PRS measurement method described above. The network side device may be configured to perform the steps of the positioning reference signal PRS measurement method described above.

It should be noted that the term "include", "comprise", or any other variation thereof in this specification is intended to cover a non-exclusive inclusion, so that a process, method, article, or device including a series of elements includes not only those elements but also other elements not explicitly listed, or elements inherent to such a process, method, article, or device. Without more restrictions, the elements defined by the sentence "including a..." do not exclude the existence of other identical elements in the process, method, article, or apparatus including the elements. In addition, it should be noted that, the scope of the methods and apparatuses in the implementations of this application is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions in the foregoing implementations, a person skilled in the art may clearly learn that the method according to the foregoing embodiment may be implemented by means of software plus a necessary universal hardware platform, or certainly, by using hardware. However, in many cases, the former is a preferred implementation. Based on such an understanding, the technical solutions of this application essentially, or a part contributing to the related art, may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods according to the embodiments of this application.

The embodiments of this application have been described above with reference to the accompanying drawings, but this application is not limited to the foregoing specific implementations. The foregoing specific implementations are only illustrative instead of restrictive. Under the inspiration of this application, without departing from the purpose of this application and the scope of protection of the claims, a person of ordinary skill in the art can still make many forms, which all fall within the protection of this application.

**Claims**

1. A positioning reference signal PRS measurement method, comprising:
   performing, by a terminal, PRS measurement on at least one of a plurality of carriers to obtain a positioning measurement result in a case that the terminal is capable of simultaneously performing PRS measurement on the plurality of carriers, wherein the positioning measurement result is used for positioning the terminal.

2. The positioning reference signal PRS measurement method according to claim 1, wherein the positioning measurement result comprises at least one of the following:

   a reference signal time difference RSTD;
   a receiving and sending time difference between receiving a PRS and sending an uplink reference signal by the terminal;
   positioning reference signal-reference signal received power PRS-RSRP;
   positioning reference signal-reference signal received path power PRS-RSRPP; or
   a carrier phase.

3. The positioning reference signal PRS measurement method according to claim 1, wherein a carrier aggregation manner of the plurality of carriers comprises one of the following:

   intra-band contiguous carrier aggregation;
   intra-band non-contiguous carrier aggregation; or
   inter-band carrier aggregation.

4. The positioning reference signal PRS measurement method according to claim 3, wherein the carrier aggregation manner comprises a carrier aggregation manner in a first frequency band or a carrier aggregation manner in a second frequency band; and a frequency of the first frequency band is less than a frequency of the second frequency band.

5. The positioning reference signal PRS measurement method according to claim 3, wherein in a case that the carrier aggregation manner comprises the intra-band contiguous carrier aggregation, a PRS on each carrier meets at least one of the following:

   having a same subcarrier spacing SCS;
   having a same cyclic prefix CP type;
   having a same reference point;
   having a same PRS periodicity;
   having a same slot offset within a PRS periodicity;
   having a same PRS resource repetition factor;
   having a same system frame number SFN;
   being in a same slot slot;
   being on a same symbol;
   having a same comb size; or
   having a same PRS sequence.

6. The positioning reference signal PRS measurement method according to claim 3, wherein before the performing, by a terminal, PRS measurement on at least one of a plurality of carriers, the method further comprises:

sending, by the terminal, first capability information of the terminal to a network side device in a case that the carrier aggregation manner comprises the intra-band contiguous carrier aggregation, wherein
the first capability information of the terminal comprises at least one of the following:

a frequency band in which the terminal supports positioning by using multi-carrier aggregation;
a quantity of carriers on which the terminal supports positioning by using multi-carrier aggregation; or
a maximum bandwidth on which the terminal supports positioning by using multi-carrier aggregation.

7. The positioning reference signal PRS measurement method according to claim 3, wherein before the performing, by a terminal, PRS measurement on at least one of a plurality of carriers, the method further comprises:

sending, by the terminal, second capability information of the terminal to a network side device in a case that the carrier aggregation manner comprises the intra-band non-contiguous carrier aggregation or the inter-band carrier aggregation, wherein
the second capability information of the terminal comprises at least one of the following:

a frequency band in which the terminal supports positioning by using multi-carrier aggregation;
a quantity of carriers on which the terminal supports positioning by using multi-carrier aggregation;
a maximum bandwidth on which the terminal supports positioning by using multi-carrier aggregation;
a timing difference between carriers;
a frequency difference between carriers;
a phase difference between carriers; or
a power difference between carriers.

8. The positioning reference signal PRS measurement method according to claim 7, wherein the at least one carrier is more than one carrier; and
the performing, by a terminal, PRS measurement on at least one of a plurality of carriers to obtain a positioning measurement result comprises:
performing, by the terminal, PRS measurement on a plurality of carriers that do not meet at least one of the following conditions, to obtain the positioning measurement result:

a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.

9. The positioning reference signal PRS measurement method according to claim 7 or 8, wherein the at least one carrier is more than one carrier; and the method further comprises:
skipping, by the terminal, performing PRS measurement on a plurality of carriers that meet at least one of the following conditions, or performing, by the terminal, PRS measurement on a plurality of carriers that meet at least one of the following conditions, to obtain the positioning measurement result, wherein the positioning measurement result is not used for positioning the terminal:

a timing difference between the carriers is greater than or equal to the first threshold;
a frequency difference between the carriers is greater than or equal to the second threshold;
a phase difference between the carriers is greater than or equal to the third threshold; and
a power difference between the carriers is greater than or equal to the fourth threshold.

10. The positioning reference signal PRS measurement method according to claim 8 or 9, wherein

the first threshold is a maximum timing difference allowed between the carriers;
the second threshold is a maximum frequency difference allowed between the carriers;
the third threshold is a maximum phase difference allowed between the carriers; and
the fourth threshold is a maximum power difference allowed between the carriers.

11. The positioning reference signal PRS measurement method according to claim 3, wherein the performing, by a terminal, PRS measurement on at least one of a plurality of carriers comprises:

for each of the carrier aggregation manners, performing, by the terminal, PRS measurement on one of the plurality of carriers to obtain the positioning measurement result; or
performing, by the terminal, PRS measurement on the plurality of carriers to obtain a measurement result corresponding to each PRS, and determining the positioning measurement result based on a measurement result corresponding to at least one of a plurality of PRSs.

12. The positioning reference signal PRS measurement method according to claim 11, wherein the terminal performs PRS measurement on the one of the plurality of carriers based on at least one of the following parameters:

a subcarrier spacing SCS;
a bandwidth;
a signal-to-noise ratio; and
a total quantity of PRS resources.

13. The positioning reference signal PRS measurement method according to claim 11, wherein the terminal performs PRS measurement on the plurality of carriers based on at least one of the following parameters:

a subcarrier spacing SCS;
a bandwidth;
a signal-to-noise ratio; and
a total quantity of PRS resources.

14. The positioning reference signal PRS measurement method according to claim 12 or 13, wherein the total quantity of PRS resources is determined based on the following parameters:
a PRS resource repetition factor, a quantity of symbols occupied by the PRS resource, and a comb size of the PRS resource.

15. The positioning reference signal PRS measurement method according to any one of claims 1 to 14, wherein the performing, by a terminal, PRS measurement on at least one of a plurality of carriers comprises:
performing, by the terminal, PRS measurement on the at least one of the plurality of carriers based on PRS measurement time.

16. The positioning reference signal PRS measurement method according to claim 15, wherein the PRS measurement time is determined based on the following parameters:

a PRS periodicity, a duration of an available PRS resource, and a maximum quantity of PRS resources in a slot, wherein
the PRS periodicity is a least common multiple of PRS periodicities on all carriers;
the duration of the available PRS resource is a largest value among durations of PRS resources on all carriers; and
the maximum quantity of PRS resources in the slot is a largest value among quantities of PRS resources in all slots on all carriers.

17. The positioning reference signal PRS measurement method according to any one of claims 1 to 14, wherein after the performing, by a terminal, PRS measurement on at least one of a plurality of carriers to obtain a positioning measurement result, the method further comprises:
sending, by the terminal, the positioning measurement result to the network side device.

18. A positioning reference signal PRS measurement method, comprising:

receiving, by a network side device, a positioning measurement result sent by a terminal, wherein the positioning measurement result is a result obtained by performing PRS measurement on at least one of a plurality of carriers in a case that the terminal is capable of simultaneously performing PRS measurement on the plurality of carriers; and
positioning, by the network side device, the terminal based on the positioning measurement result.

19. The positioning reference signal PRS measurement method according to claim 18, wherein the positioning measurement result comprises at least one of the following:

   a reference signal time difference RSTD;
   a receiving and sending time difference between receiving a PRS and sending an uplink reference signal by the terminal;
   positioning reference signal-reference signal received power PRS-RSRP;
   positioning reference signal-reference signal received path power PRS-RSRPP; or
   a carrier phase.

20. The positioning reference signal PRS measurement method according to claim 18, wherein a carrier aggregation manner of the plurality of carriers comprises one of the following:

   intra-band contiguous carrier aggregation;
   intra-band non-contiguous carrier aggregation; or
   inter-band carrier aggregation.

21. The positioning reference signal PRS measurement method according to claim 20, wherein the carrier aggregation manner comprises a carrier aggregation manner in a first frequency band or a carrier aggregation manner in a second frequency band; and a frequency of the first frequency band is less than a frequency of the second frequency band.

22. The positioning reference signal PRS measurement method according to claim 20, wherein before the receiving, by a network side device, a positioning measurement result sent by a terminal, the method further comprises:

   receiving, by the network side device, first capability information of the terminal sent by the terminal, wherein the first capability information is sent by the terminal in a case that the carrier aggregation manner comprises the intra-band contiguous carrier aggregation; and
   configuring, by the network side device, PRSs on the plurality of carriers for the terminal based on the first capability information of the terminal, wherein
   the first capability information of the terminal comprises at least one of the following:

      a frequency band in which the terminal supports positioning by using multi-carrier aggregation;
      a quantity of carriers on which the terminal supports positioning by using multi-carrier aggregation; or
      a maximum bandwidth on which the terminal supports positioning by using multi-carrier aggregation.

23. The positioning reference signal PRS measurement method according to claim 22, wherein the configuring, by the network side device, PRSs on the plurality of carriers for the terminal based on the first capability information of the terminal meets at least one of the following:

   having a same subcarrier spacing SCS;
   having a same cyclic prefix CP type;
   having a same reference point;
   having a same PRS periodicity;
   having a same slot offset within a PRS periodicity;
   having a same PRS resource repetition factor;
   having a same system frame number SFN;
   being in a same slot slot;
   being on a same symbol;
   having a same comb size; or
   having a same PRS sequence.

24. The positioning reference signal PRS measurement method according to claim 20, wherein before the receiving, by a network side device, a positioning measurement result sent by a terminal, the method further comprises:

   receiving, by the network side device, second capability information of the terminal sent by the terminal, wherein the second capability information is sent by the terminal in a case that the carrier aggregation manner comprises the intra-band non-contiguous carrier aggregation or the inter-band carrier aggregation; and
   configuring, by the network side device, PRSs on the plurality of carriers for the terminal based on the second capability information of the terminal, wherein
the second capability information of the terminal comprises at least one of the following:

a frequency band in which the terminal supports positioning by using multi-carrier aggregation;
a quantity of carriers on which the terminal supports positioning by using multi-carrier aggregation;
a maximum bandwidth on which the terminal supports positioning by using multi-carrier aggregation;
a timing difference between carriers;
a frequency difference between carriers;
a phase difference between carriers; or
a power difference between carriers.

25. The positioning reference signal PRS measurement method according to claim 24, wherein the positioning, by the network side device, the terminal based on the positioning measurement result comprises:
positioning, by the network side device, the terminal based on the positioning measurement result in a case that the positioning measurement result is a result obtained by the terminal by performing PRS measurement on a plurality of carriers that do not meet at least one of the following conditions:

a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.

26. The positioning reference signal PRS measurement method according to claim 24, wherein the method further comprises:
skipping, by the network side device, positioning the terminal based on the positioning measurement result in a case that the positioning measurement result is a result obtained by the terminal by performing PRS measurement on a plurality of carriers that meet at least one of the following conditions:

a timing difference between the carriers is greater than or equal to a first threshold;
a frequency difference between the carriers is greater than or equal to a second threshold;
a phase difference between the carriers is greater than or equal to a third threshold; and
a power difference between the carriers is greater than or equal to a fourth threshold.

27. The positioning reference signal PRS measurement method according to claim 25 or 26, wherein

the first threshold is a maximum timing difference allowed between the carriers;
the second threshold is a maximum frequency difference allowed between the carriers;
the third threshold is a maximum phase difference allowed between the carriers; and
the fourth threshold is a maximum power difference allowed between the carriers.

28. A positioning reference signal PRS measurement apparatus, comprising:
a first measurement module, configured to perform PRS measurement on at least one of a plurality of carriers to obtain a positioning measurement result in a case that a terminal is capable of simultaneously performing PRS measurement on the plurality of carriers, wherein the positioning measurement result is used for positioning the terminal.

29. A positioning reference signal PRS measurement apparatus, comprising:

a first receiving module, configured to receive a positioning measurement result sent by a terminal, wherein the positioning measurement result is a result obtained by performing PRS measurement on at least one of a plurality of carriers in a case that the terminal is capable of simultaneously performing PRS measurement on the plurality of carriers; and
a first positioning module, configured to position the terminal based on the positioning measurement result.

30. A terminal, comprising a processor and a memory, wherein the memory stores a program or an instruction runnable on the processor, and the program or the instruction, when executed by the processor, implements the steps of the positioning reference signal PRS measurement method according to any one of claims 1 to 17.

31. A network side device, comprising a processor and a memory, wherein the memory stores a program or an instruction runnable on the processor, and the program or the instruction, when executed by the processor, implements the steps of the positioning reference signal PRS measurement method according to any one of claims 18 to 27.

32. A readable storage medium, wherein the readable storage medium stores a program or an instruction, and the program or the instruction, when executed by a processor, implements the steps of the positioning reference signal PRS measurement method according to any one of claims 1 to 17, or the steps of the positioning reference signal PRS measurement method according to any one of claims 18 to 27.

FIG. 1

A terminal performs PRS measurement on at least one of a plurality of carriers to obtain a positioning measurement result in a case that the terminal is capable of simultaneously performing PRS measurement on the plurality of carriers, where the positioning measurement result is used for positioning the terminal

201

FIG. 2

A terminal sends first capability information of the terminal to a network side device in a case that a carrier aggregation manner includes intra-band contiguous carrier aggregation

202

The terminal performs PRS measurement on at least one of a plurality of carriers to obtain a positioning measurement result in a case that the terminal is capable of simultaneously performing PRS measurement on the plurality of carriers, where the positioning measurement result is used for positioning the terminal

201

FIG. 3

A terminal sends second capability information of the terminal to a network side device in a case that a carrier aggregation manner includes intra-band non-contiguous carrier aggregation or inter-band carrier aggregation    203

The terminal performs PRS measurement on at least one of a plurality of carriers to obtain a positioning measurement result in a case that the terminal is capable of simultaneously performing PRS measurement on the plurality of carriers, where the positioning measurement result is used for positioning the terminal    201

## FIG. 4

A network side device receives a positioning measurement result sent by a terminal, where the positioning measurement result is a result obtained by performing PRS measurement on at least one of a plurality of carriers in a case that the terminal is capable of simultaneously performing PRS measurement on the plurality of carriers    501

The network side device positions the terminal based on the positioning measurement result    502

## FIG. 5

A network side device receives first capability information of a terminal sent by the terminal, where the first capability information is sent by the terminal in a case that a carrier aggregation manner includes intra-band contiguous carrier aggregation    503

The network side device configures PRSs on a plurality of carriers for the terminal based on the first capability information of the terminal    504

The network side device receives a positioning measurement result sent by the terminal, where the positioning measurement result is a result obtained by performing PRS measurement on at least one of the plurality of carriers in a case that the terminal is capable of simultaneously performing PRS measurement on the plurality of carriers    501

The network side device positions the terminal based on the positioning measurement result    502

## FIG. 6

A network side device receives second capability information of a terminal sent by the terminal, where the second capability information is sent by the terminal in a case that a carrier aggregation manner includes intra-band non-contiguous carrier aggregation or inter-band carrier aggregation | 505

The network side device configures PRSs on a plurality of carriers for the terminal based on the second capability information of the terminal | 506

The network side device receives a positioning measurement result sent by the terminal, where the positioning measurement result is a result obtained by performing PRS measurement on at least one of the plurality of carriers in a case that the terminal is capable of simultaneously performing PRS measurement on the plurality of carriers | 501

The network side device positions the terminal based on the positioning measurement result | 502

## FIG. 7

800

Positioning reference signal measurement apparatus

First measurement module | 801

## FIG. 8

900

Positioning reference signal
measurement apparatus

First receiving module 901

First positioning module 902

FIG. 9

1000

Communication device

1001 Processor Memory 1002

FIG. 10

FIG. 11

FIG. 12

## INTERNATIONAL SEARCH REPORT

| | International application No. |
|---|---|
| | **PCT/CN2023/106043** |

**A. CLASSIFICATION OF SUBJECT MATTER**

H04W64/00(2009.01)i;  H04W24/08(2009.01)i

According to International Patent Classification (IPC) or to both national classification and IPC

**B. FIELDS SEARCHED**

Minimum documentation searched (classification system followed by classification symbols)

IPC:H04W; H04L; H04B; H04M

Documentation searched other than minimum documentation to the extent that such documents are included in the fields searched

Electronic data base consulted during the international search (name of data base and, where practicable, search terms used)

CNTXT, ENTXT, ENTXTC, VEN, 3GPP: 定位参考信号, 测量, 载波, 频率, 载频, 载波聚合, 定位频率层, 多, PRS, Positioning Reference Signal, carrier aggregation, CA, frequency layer, measurement, multi

**C. DOCUMENTS CONSIDERED TO BE RELEVANT**

| Category* | Citation of document, with indication, where appropriate, of the relevant passages | Relevant to claim No. |
|---|---|---|
| X | CN 113711656 A (QUALCOMM INC.) 26 November 2021 (2021-11-26) description, paragraphs 175-306, and figures 6 and 9 | 1-32 |
| X | CN 114666890 A (VIVO COMMUNICATION TECHNOLOGY CO., LTD.) 24 June 2022 (2022-06-24) description, paragraphs 39-244 | 1-32 |
| A | CN 114285535 A (VIVO COMMUNICATION TECHNOLOGY CO., LTD.) 05 April 2022 (2022-04-05) entire document | 1-32 |
| A | WO 2022032599 A1 (OPPO GUANGDONG MOBILE TELECOMMUNICATIONS CORP., LTD.) 17 February 2022 (2022-02-17) entire document | 1-32 |
| A | WO 2012167724 A1 (HUAWEI TECHNOLOGIES CO., LTD.) 13 December 2012 (2012-12-13) entire document | 1-32 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 October 2023** | **17 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/106043**

| Patent document cited in search report | | | Publication date (day/month/year) | Patent family member(s) | | | Publication date (day/month/year) |
|---|---|---|---|---|---|---|---|
| CN | 113711656 | A | 26 November 2021 | WO | 2020223307 | A1 | 05 November 2020 |
| | | | | KR | 20220004040 | A | 11 January 2022 |
| | | | | TW | 202102017 | A | 01 January 2021 |
| | | | | US | 2020351047 | A1 | 05 November 2020 |
| | | | | US | 2022006586 | A1 | 06 January 2022 |
| | | | | EP | 3963973 | A1 | 09 March 2022 |
| | | | | IN | 202127043186 | A | 07 January 2022 |
| CN | 114666890 | A | 24 June 2022 | WO | 2022135477 | A1 | 30 June 2022 |
| CN | 114285535 | A | 05 April 2022 | WO | 2022063318 | A1 | 31 March 2022 |
| WO | 2022032599 | A1 | 17 February 2022 | CN | 115669145 | A | 31 January 2023 |
| WO | 2012167724 | A1 | 13 December 2012 | US | 2014092844 | A1 | 03 April 2014 |
| | | | | CN | 102821397 | A | 12 December 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210815562